# EUROPÄISCHE PATENTSCHRIFT

(11) **EP 3 365 186 B1**
(45) Veröffentlichungstag und Bekanntmachung des Hinweises auf die Patenterteilung: **08.04.2020**
(21) Anmeldenummer: 16734650.1
(22) Anmeldetag: 04.07.2016
(51) Int. Cl.: B60C 9/00, B60C 19/08, D02G 3/40, D02G 3/48, D06M 11/74, D06M 15/693, D06M 11/79

(54) **FADEN UND FAHRZEUGLUFTREIFEN**
CORD AND PNEUMATIC VEHICLE TIRE
FIL ET PNEUMATIQUE DE VÉHICULE

(30) Priorität: 20.10.2015 DE 102015220435
(43) Veröffentlichungstag der Anmeldung: 29.08.2018
(73) Patentinhaber: Continental Reifen Deutschland GmbH, 30165 Hannover (DE)
(72) Erfinder: KENDZIORRA, Norbert, 30827 Garbsen (DE); WEBER, Christian, 30826 Garbsen (DE)
(74) Vertreter: Finger, Karsten
(86) Internationale Anmeldenummer: PCT/EP2016/065634
(87) Internationale Veröffentlichungsnummer: WO 2017/067678

(56) Entgegenhaltungen:
- GB-A- 2 156 592

## Beschreibung

Die Erfindung betrifft einen Faden zur Verwendung in einem Elastomerprodukt, vorzugsweise in einem Fahrzeugluftreifen, welcher einen Trägerfaden aus elektrisch nicht leitfähigem Material, welcher elektrisch leitfähig beschichtet ist, aufweist, wobei sich auf der elektrisch leitfähigen Schicht eine diese bedeckende weitere, elektrisch isolierende Schicht befindet. Die Erfindung betrifft ferner ein Elastomerprodukt, insbesondere einen Fahrzeugluftreifen, welcher zumindest einen derartigen Faden enthält.

Es ist üblich, in Elastomerprodukten, beispielsweise in Fahrzeugluftreifen, in Kautschukmischungen eingebettete Festigkeitsträger, beispielsweise in der Karkasse, der Gürtelbandage und dergleichen, zu verwenden. Oft werden elektrisch nicht leitfähige Materialien für die Festigkeitsträger eingesetzt, beispielsweise Polyester, Rayon, Polyamid, Aramid oder Hybridkorde aus den vorgenannten Materialien. Die Festigkeitsträger sind in Material und Konstruktion derart gewählt, dass die Anforderungen, die an die betreffenden Bauteile im Betrieb des Reifens gestellt werden, erfüllt sind. Es ist ferner üblich, Festigkeitsträger mit einer Beschichtung zu versehen, insbesondere mit einem Haftvermittler, der ebenfalls elektrisch nicht leitfähig ist und zur besseren Gummihaftung am äußeren Umfang der Festigkeitsträger aufgebracht wird, bevor dieser in eine Kautschukmischung eingebettet werden.

Um den Rollwiderstand von Fahrzeugluftreifen zu reduzieren, werden verstärkt rollwiderstandsarme Mischungen in den Seitenwandbereichen, der Innenschicht oder der Karkassgummierung eingesetzt. Mischungen für derartige Bauteile werden als "Body-Mischungen" bezeichnet. Die Hysterese dieser rollwiderstandsarmen Mischungen lässt sich vor allem durch den Einsatz nicht aktiver Füllstoffe, von geringeren Mengen an Ruß oder durch den Austausch von Ruß durch Silica verringern. Dadurch erhöht sich der elektrische Widerstand dieser Mischungen, ihre elektrische Leitfähigkeit sinkt.

Ein Faden der eingangs genannten Art ist beispielsweise aus der GB 2 156 592 A bekannt. Der Faden weist einen Trägerfaden aus einem elastischen Material, beispielsweise aus Elastan, auf. Der Trägerfaden ist von einer Schicht aus Multifilamenten aus Polyestergarnen umgeben, welche ihrerseits von einer leitfähigen Schicht, beispielsweise aus Kupfer, umgeben sind. Diese leitfähige Schicht ist ebenfalls von einer Schicht aus Multifilamenten aus Polyestergarnen umgeben. Dieser Faden soll sich insbesondere für den Einsatz in einer Radioantenne eignen.

Ferner ist aus der DE 10 2010 017 442 A1 ein Faden bekannt, der durch seine elektrisch leitfähige Beschichtung elektrisch leitfähig wird, ohne dass die sonstigen physikalischen Eigenschaften des Fadens geändert werden. Diese Fäden können daher die elektrische Leitfähigkeit bestimmter Bauteile im Reifen sicherstellen und elektrostatische Aufladungen verhindern.

Der Einsatz von elektrisch leitenden Verbindungen in Fahrzeugluftreifen und in anderen Elastomerprodukten ist bislang nur eingeschränkt möglich. Eine elektrische Verbindung über größere Strecken ist durch die ansonsten üblichen metallischen Leiter wegen der auftretenden lokalen Deformationen in Gummiartikeln, insbesondere bei Reifen, wegen deren begrenzter Biegefestigkeit und geringen Dehnbarkeit kaum möglich. Die Leitung von Strom zur Energieversorgung oder zur Signalübertragung ist vor allem in den nach wie vor vorhandenen elektrisch leitfähigen Gummimischungen nicht auf sichere Weise möglich. Nahe beieinander liegende elektrische Leiter, beispielsweise mit einer elektrisch leitfähigen Beschichtung versehene Fäden gemäß der DE 10 2010 017 442 A1, werden durch die teilweise vorhandene elektrische Leitfähigkeit des umgebenden Gummimaterials, insbesondere, wenn dieses als Füllstoff Ruß enthält, in ihrer Signalleitfähigkeit stark beeinträchtigt.

Der Erfindung liegt die Aufgabe zugrunde, einen Faden der eingangs genannten Art derart auszuführen, dass unabhängig von der elektrischen Leitfähigkeit der umgebenden Gummimatrix eine elektrisch leitende Verbindung von in einem Elastomerprodukt eingebauten Sensoren, Aktuatoren und dergleichen, beispielsweise zur Spannungsversorgung, sichergestellt werden kann.

Gelöst wird die gestellte Aufgabe erfindungsgemäß dadurch, dass die elektrisch leitfähige Schicht elektrisch leitfähige Partikel, beispielsweise Rußpartikel, Graphitpulver oder Carbon-Nanotubes, enthält oder aus solchen Partikeln bzw. Pulver besteht.

Durch die gemäß der Erfindung vorgesehene elektrisch isolierende Schicht als äußere Schicht können mehrere Fäden nebeneinander, auch in Kontakt zueinander, in eine Gummimatrix eingebettet werden, auch wenn diese elektrisch leitfähig ist. Möglich ist auch eine überkreuzende Anordnung der Fäden, ohne dass es zu einer gegenseitigen elektrischen Beeinflussung kommt.

Bei einer bevorzugten Ausführungsform der Erfindung weist der Faden mehrere elektrisch leitfähige und mehrere elektrisch isolierende Schichten in abwechselnder Aufeinanderfolge auf, wobei die äußerste Schicht eine elektrisch isolierende Schicht ist. Bei einer derartigen Ausführung ist es möglich, zwei oder mehr elektrische Verbraucher im Elastomerprodukt unabhängig voneinander über diesen Faden mit Spannung zu versorgen oder die vorgesehenen elektrisch leitfähigen Schichten unabhängig voneinander zur Signalübertragung zu benützen.

Um eine gute elektrisch isolierende Wirkung zu erzielen, sollte die elektrisch isolierende Schicht frei oder weitgehend frei von elektrisch leitfähigen Partikeln sein.

Zur Verbesserung der mechanischen Eigenschaften der jeweils vorgesehenen elektrisch isolierenden Schichten können diese Schichten elektrisch nicht leitende Füllstoffe, insbesondere fein verteilte Kieselsäure, enthalten.

Bei einer bevorzugten Ausfuhrungsform der Erfindung kann sowohl zumindest eine der vorgesehenen elektrisch isolierenden Schichten und/oder zumindest eine der vorgesehenen elektrisch leitfähigen Schichten auf der Basis von elastomerhaltigen, insbesondere Latex enthaltenden, Lösungen oder Suspensionen hergestellt sein.

Bevorzugterweise beträgt der Anteil an elektrisch leitfähigen Partikeln in einer zur Herstellung einer elektrisch leitenden Schicht vorgesehenen Suspension 10 Gew.-% bis 70 Gew.-%, vorzugsweise 30 Gew.-% bis 50 Gew.-%.

Vorzugsweise beträgt ferner der Anteil an elektrisch nicht leitfähigen Füllstoffen in einer zur Herstellung einer elektrisch isolierenden Schicht vorgesehenen Suspension 10 Gew.-% bis 70 Gew.-%, vorzugsweise 30 Gew.-% bis 50 Gew.-%.

Die Erfindung betrifft ferner ein Elastomerprodukt, welches zumindest einen erfindungsgemäßen Faden enthält. Besonders vorteilhaft ist die Verwendung erfindungsgemäßer Fäden in einem Fahrzeugluftreifen, beispielsweise zur Signalübertragung und/oder Spannungsversorgung, insbesondere in der Karkasseinlage eines in radialer Bauart ausgeführten Fahrzeugluftreifens.

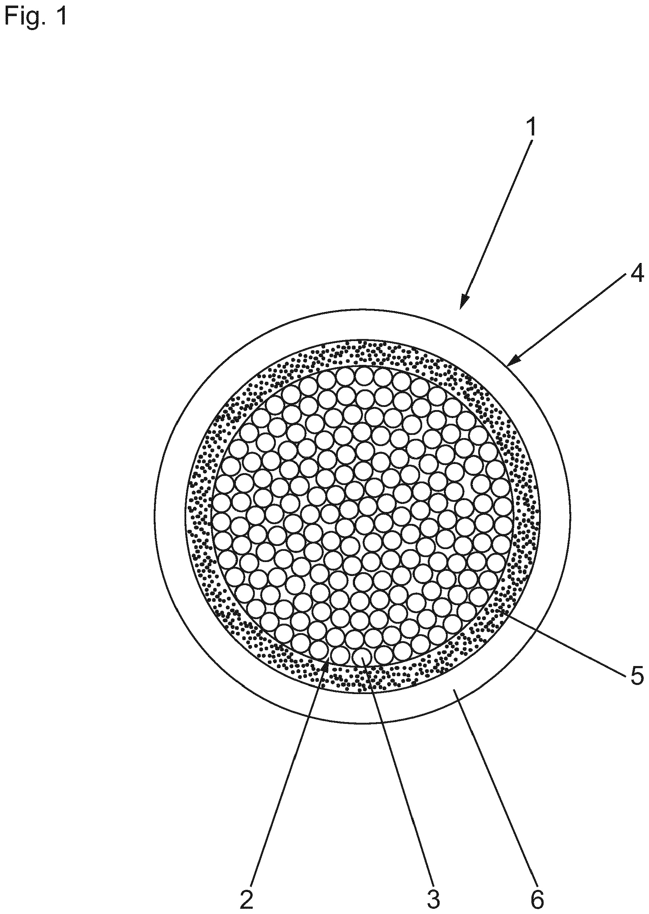

Die Erfindung wird nun anhand eines schematischen Ausführungsbeispiels näher erläutert. Dabei zeigt Fig. 1 einen Querschnitt durch eine Ausführungsvariante eines elektrisch leitfähigen Fadens.

Fig. 1 zeigt einen Querschnitt durch einen elektrisch leitenden Faden 1, welcher aus einem außenseitig beschichteten Trägerfaden 2 besteht. Der Trägerfaden 2 kann ein Monofilament, ein Garn oder ein aus mehreren Garnen bestehender Kord sein. In Fig. 1 ist ein Garn aus einer Vielzahl von Filamenten 3 gezeigt. Der Trägerfaden 2 besteht aus textilem, nicht metallischem Material, wie beispielsweise Rayon, Polyester, Polyamid oder Aramid und ist daher elektrisch nicht leitfähig. Der Trägerfaden 2 kann auch aus verschiedenen nicht metallischen Materialien bestehen.

Der Faden 1 weist eine mehrlagige, bei der in Fig. 1 gezeigten Ausführung zweilagige Beschichtung 4 auf. Die unmittelbar auf dem Trägerfaden 2 befindliche Schicht 5 ist elektrisch leitfähig und kann aus Ruß, Graphitpulver oder Carbon-Nanotubes oder aus einem elastomerhaltigen Material bestehen, welches beispielsweise auf einer Latex oder ein anderes Elastomer enthaltenden Suspension basiert, in welcher elektrisch leitfähige Partikel, etwa Rußpartikel, Graphitpulver oder Carbon-Nanotubes, enthalten sind, die die elektrische Leitfähigkeit der Schicht 5 gewährleisten. Zur Herstellung der Schicht 5 kann beispielsweise ein Rußpartikel enthaltender herkömmlicher Haftvermittler verwendet werden, der so weit flüssig ist, dass der Trägerfaden 2 bei einem Dip-Vorgang beschichtet werden kann. Verwendet werden kann beispielsweise ein RFL-Dip (Resorzin-Formaldehyd-Latex-Dip), in welchem Rußpartikel, insbesondere N339-Partikel oder N121-Partikel, eingemischt sind. Der Anteil an elektrisch leitfähigen Partikeln in der Suspension beträgt 10 Gew.-% bis 70 Gew.-% und besonders bevorzugt von 30 Gew.-% bis 50 Gew.-%. Der Anteil der getrockneten Schicht 5 beträgt 7 Gew.-% bis 20 Gew.-%, vorzugsweise etwa 10 Gew.-%, des Fadens 1. Die den Trägerfaden 2 umgebende elektrisch leitfähige Schicht 5 ist von einer weiteren jedoch elektrisch isolierenden Schicht 6 außenseitig umhüllt. Die elektrisch isolierende Schicht 6 wird beispielsweise ebenfalls durch einen Dip-Vorgang auf die Schicht 5 aufgebracht. Basis der elektrisch isolierenden Schicht 6 ist insbesondere eine elastomerhaltige Lösung oder Suspension, beispielsweise eine Latexlösung, die vorzugsweise keine elektrisch leitfähigen Partikel oder eine Suspension mit einer derart geringen Konzentration an elektrisch leitfähigen Partikeln, etwa Rußpartikeln, ist, dass keine elektrische Leitfähigkeit begründet wird. Die elektrisch isolierende Schicht 6 kann ebenfalls auf Basis einer üblichen Haftvermittlerflüssigkeit, beispielsweise eines RFL-Dips, erstellt werden. Bei einer bevorzugten Ausführungsform wird eine elastomerhaltige Suspension, beispielsweise ebenfalls auf Latexbasis, verwendet, die, insbesondere zur Verbesserung der mechanischen Eigenschaften der Schicht 6, elektrisch nicht leitende Füllstoffe, insbesondere fein verteilte Kieselsäure (Silica), enthält. Der Anteil an elektrisch nicht leitfähigen Füllstoffen in der Suspension beträgt 10 Gew.-% bis 70 Gew.-%, vorzugsweise 30 Gew.-% bis 50 Gew.-%. Der Anteil der getrockneten Schicht 6 beträgt 7 Gew.-% bis 20 Gew.-%, vorzugsweise etwa 10 Gew.-%, des Fadens 1.

Die elektrisch isolierende äußere Schicht 6 gestattet es, mehrere infolge der Schicht 5 elektrisch leitfähige Fäden 1 nebeneinander anzuordnen, ohne dass diese sich gegenseitig elektrisch beeinflussen oder bei Berührung Kurzschlüsse verursachen, insbesondere in einer leitfähigen Gummimatrix. Erfindungsgemäß beschichtete Fäden 1 können daher auch überkreuzend angeordnet werden. Besonders vorteilhaft ist die Verwendung der Fäden 1 als elektrisch leitende Elemente zur Kontaktierung von elektrischen Elementen, Sensoren und Aktuatoren in Gummiartikeln, insbesondere in Fahrzeugluftreifen.

Bei einer weiteren Ausführungsform der Erfindung kann auf der äußeren Schicht 6 eine weitere elektrisch leitfähige Schicht, analog zur Schicht 5, und auf diese eine zweite elektrisch isolierende Schicht, analog zur Schicht 6, aufgebracht werden. Derart können mehrere elektrisch leitende und elektrisch isolierende Schichten abwechselnd aufgebracht werden, sodass der Faden mehrere separate elektrisch leitende Passagen enthält.

### Bezugsziffernliste

- 1: Faden
- 2: Trägerfaden
- 3: Filament
- 4: Beschichtung
- 5: Schicht
- 6: Schicht

## Patentansprüche

1. Faden (1) zur Verwendung in einem Elastomerprodukt, vorzugsweise in einem Fahrzeugluftreifen, welcher einen Trägerfaden (2) aus elektrisch nicht leitfähigem Material, welcher elektrisch leitfähig beschichtet ist, aufweist, wobei sich auf der elektrisch leitfähigen Schicht (5) eine diese bedeckende weitere, elektrisch isolierende Schicht (6) befindet,
**dadurch gekennzeichnet,**
**dass** die elektrisch leitfähige Schicht (5) elektrisch leitfähige Partikel, beispielsweise Rußpartikel, Graphitpulver oder Carbon-Nanotubes, enthält oder aus solchen Partikeln bzw. Pulver besteht.

2. Faden (1) nach Anspruch 1, **dadurch gekennzeichnet, dass** er mehrere elektrisch leitfähige und mehrere elektrisch isolierende Schichten (5, 6) in abwechselnder Aufeinanderfolge aufweist, wobei die äußerste Schicht (6) eine elektrisch isolierende Schicht ist.

3. Faden (1) nach Anspruch 1 oder 2, **dadurch gekennzeichnet, dass** die elektrisch isolierende Schicht (6) frei oder weitgehend frei von elektrisch leitfähigen Partikeln ist.

4. Faden (1) nach einem der Ansprüche 1 bis 3, **dadurch gekennzeichnet, dass** die elektrisch isolierende Schicht (6) elektrisch nicht leitende Partikel, beispielsweise Kieselsäurepartikel, enthält.

5. Faden (1) nach einem der Ansprüche 1 bis 4 **dadurch gekennzeichnet, dass** zumindest eine der Schichten (5, 6) auf der Basis von elastomerhaltigen, insbesondere Latex enthaltenden Lösungen oder Suspensionen hergestellt ist.

6. Faden (1) nach Anspruch 5, **dadurch gekennzeichnet, dass** der Anteil an elektrisch leitfähigen Partikeln in einer zur Herstellung einer elektrisch leitenden Schicht (5) vorgesehenen Suspension 10 Gew.-% bis 70 Gew.-%, vorzugsweise 30 Gew.-% bis 50 Gew.-%, beträgt.

7. Faden (1) nach Anspruch 5 oder 6, **dadurch gekennzeichnet, dass** Anteil an elektrisch nicht leitfähigen Füllstoffen in einer zur Herstellung einer elektrisch isolierenden Schicht (6) vorgesehenen Suspension 10 Gew.-% bis 70 Gew.-%, vorzugsweise 30 Gew.-% bis 50 Gew.-%, beträgt.

8. Elastomerprodukt, welches zumindest einen Faden (1) nach einem der Ansprüche 1 bis 7 enthält.

9. Fahrzeugluftreifen, welcher zumindest einen Faden (1) nach einem der Ansprüche 1 bis 7 enthält.

10. Fahrzeugluftreifen nach Anspruch 9, welcher Fäden (1) nach einem der Ansprüche 1 bis 7 in der Radialkarkasse enthält.

## Claims

1. Cord (1) for use in an elastomer product, preferably in a pneumatic tire, comprising a reinforcement core (2) which is made of an electrically nonconductive material and which has an electrically conductive coating, where, located on the electrically conductive layer (5), covering same, there is a further, electrically insulating layer (6), **characterized**
**in that** the electrically conductive layer (5) comprises electrically conductive particles, for example carbon black particles, graphite powder or carbon nanotubes, or consists of such particles or powder.

2. Cord (1) according to Claim 1, **characterized in that** it comprises a plurality of electrically conductive layers and a plurality of electrically insulating layers (5, 6) in alternating sequence, where the outermost layer (6) is an electrically insulating layer.

3. Cord (1) according to Claim 1 or 2, **characterized in that** the electrically insulating layer (6) is free from, or substantially free from, electrically conductive particles.

4. Cord (1) according to any of Claims 1 to 3, **characterized in that** the electrically insulating layer (6) comprises electrically nonconductive particles, for example silica particles.

5. Cord (1) according to any of Claims 1 to 4, **characterized in that** production of at least one of the layers (5, 6) has been based on elastomer-containing, in particular latex-containing, solutions or suspensions.

6. Cord (1) according to Claim 5, **characterized in that** the proportion of electrically conductive particles in a suspension provided for the production of an electrically conductive layer (5) is from 10% by weight to 70% by weight, preferably from 30% by weight to 50% by weight.

7. Cord (1) according to Claim 5 or 6, **characterized in that** the proportion of electrically nonconductive fillers in a suspension provided for the production of an electrically insulating layer (6) is from 10% by weight to 70% by weight, preferably from 30% by weight to 50% by weight.

8. Elastomer product which comprises at least one cord (1) according to any of Claims 1 to 7.

9. Pneumatic tire which comprises at least one cord (1) according to any of Claims 1 to 7.

10. Pneumatic tire according to Claim 9, which comprises cords (1) according to any of Claims 1 to 7 in the radial carcass.

## Revendications

1. Fil (1) destiné à une utilisation dans un produit élastomère, de préférence dans un pneu de véhicule, qui comprend un fil support (2) en un matériau électriquement non conducteur, qui est muni d'un revêtement électriquement conducteur, une couche électriquement isolante (6) supplémentaire se trouvant sur la couche électriquement conductrice (5) et recouvrant celle-ci,
**caractérisé en ce que**
la couche électriquement conductrice (5) contient des particules électriquement conductrices, par exemple des particules de noir de carbone, une poudre de graphite ou des nanotubes de carbone, ou est constituée par de telles particules ou une telle poudre.

2. Fil (1) selon la revendication 1, **caractérisé en ce qu'**il comprend plusieurs couches électriquement conductrices et plusieurs couches électriquement isolantes (5, 6) en succession alternée, la couche (6) la plus extérieure étant une couche électriquement isolante.

3. Fil (1) selon la revendication 1 ou 2, **caractérisé en ce que** la couche électriquement isolante (6) est exempte ou essentiellement exempte de particules électriquement conductrices.

4. Fil (1) selon l'une quelconque des revendications 1 à 3, **caractérisé en ce que** la couche électriquement isolante (6) contient des particules électriquement non conductrices, par exemple des particules de silice.

5. Fil (1) selon l'une quelconque des revendications 1 à 4, **caractérisé en ce qu'**au moins une des couches (5, 6) est fabriquée à partir de solutions ou suspensions contenant un élastomère, notamment contenant un latex.

6. Fil (1) selon la revendication 5, **caractérisé en ce que** la proportion de particules électriquement conductrices dans une suspension prévue pour la fabrication d'une couche électriquement conductrice (5) est de 10 % en poids à 70 % en poids, de préférence de 30 % en poids à 50 % en poids.

7. Fil (1) selon la revendication 5 ou 6, **caractérisé en ce que** la proportion de charges électriquement non conductrices dans une suspension prévue pour la fabrication d'une couche électriquement isolante (6) est de 10 % en poids à 70 % en poids, de préférence de 30 % en poids à 50 % en poids.

8. Produit élastomère, qui contient au moins un fil (1) selon l'une quelconque des revendications 1 à 7.

9. Pneu de véhicule, qui contient au moins un fil (1) selon l'une quelconque des revendications 1 à 7.

10. Pneu de véhicule selon la revendication 9, qui contient des fils (1) selon l'une quelconque des revendications 1 à 7 dans la carcasse radiale.
